Europäisches Patentamt

European Patent Office

Office européen des brevets

(19)

(11) Veröffentlichungsnummer : **0 326 511 B1**

(12) # EUROPÄISCHE PATENTSCHRIFT

(45) Veröffentlichungstag der Patentschrift :
26.02.92 Patentblatt 92/09

(51) Int. Cl.$^5$ : **G01N 21/05, G01N 21/41**

(21) Anmeldenummer : **89810007.8**

(22) Anmeldetag : **05.01.89**

(54) **Mikrodurchflusszelle.**

(30) Priorität : **14.01.88 CH 121/88**

(43) Veröffentlichungstag der Anmeldung :
**02.08.89 Patentblatt 89/31**

(45) Bekanntmachung des Hinweises auf die
Patenterteilung :
**26.02.92 Patentblatt 92/09**

(84) Benannte Vertragsstaaten :
**CH DE FR GB IT LI**

(56) Entgegenhaltungen :
**EP-A- 0 158 948
US-A- 3 728 032
US-A- 4 175 233
US-A- 4 243 883
ANALYTICAL CHEMISTRY, Band 56, Nr. 4,
April 1984, Seiten 619A,620A,622A,624A,627A;
J.C. FJELDSTED et al.: "Capillary supercritical
fluid chromatography"**

(73) Patentinhaber : **CIBA-GEIGY AG
Klybeckstrasse 141
CH-4002 Basel (CH)**

(72) Erfinder : **Anton, Klaus, Dr.
Haltingerstrasse 75
CH-4057 Basel (CH)**
Erfinder : **Dätwyler, Peter, Dr.
Bienenstrasse 37
CH-4104 Oberwil (CH)**
Erfinder : **Gassmann, Ernst, Dr.
Hollenweg 40
CH-4114 Hofstetten (CH)**
Erfinder : **Jordi, Peter Eugen
Rämelstrasse 5
CH-4055 Basel (CH)**
Erfinder : **Pericles, Nico
Alte Landstrasse 6
CH-5027 Herznach (CH)**

## Beschreibung

Die Erfindung betrifft eine Mikrodurchflusszelle für chromatographische oder spektrometrische Messungen gemäss Oberbegriff des Patentanspruchs 1.

Aus dem Gebiet der Flüssigkeitschromatographie (liquid chromatography LC), der sogenannten Supercritical Fluid Chromatographie (SFC), der Gaschromatographie (GC) und der Kapillarzonenelektrophorese (CZE) werden zur Messung und zur Analyse Mikrokolonnen - und Kapillartrenntechniken angewendet. Bei diesen Techniken kommen üblicherweise Durchflusszellen zum Einsatz, um die Messungen in einem genau definierten Volumen mit genau bekannter Umgebung durchführen zu können. Als Messverfahren sind üblicherweise optische Absorptions-, Remissions-, Lumineszenz-, Emissions- und spektralphotometrische Verfahren gebräuchlich, es werden aber auch Ablagerungsraten in elektrischen Feldern untersucht.

Ein Verfahren der letzteren Art ist beispielsweise in der US-A-4,175,233 beschrieben. Dabei wird die Ablagerungsrate von festen Bestandteilen der zu untersuchenden Flüssigkeit (Blut) an germaniumbeschichteten Glasplatten gemessen. Die mit Elektrodenanschlusstücken versehenen Glasplatten sind in Aussparungen zweier Halbschalen eingepasst und begrenzen, zusammen mit zwei längsseitig zwischen den Glasplatten angeordneten Glassstäben, nach Zusammenfügen der beiden Halbschalen ein quaderförmiges Volumen mit offenen Stirnflächen als Zu- und Abfluss der Durchflusszelle. Zufluss- und abflusseitig sind zwei Anschlussstücke vorgesehen, die mit flanschartigen Verbreiterungen in entsprechenden Aussparungen in den Halbschalen sitzen. Die Anschlussstücke weisen an ihren entgegengesetzten Enden je eine Ringnut auf, welche zur Fixierung einer Schlauchverbindung mittels Klemmring dient. In einer besonderen Ausbildungsform weist eine der beiden Halbschalen ein lichtdurchlässiges Fenster auf, um auch Infrarot Messungen zu erlauben. Die beiden zusammengesetzten Halbschalen werden von zwei Schellen zusammengehalten. Die derart ausgebildeten Durchflusszellen sind relativ gross und entsprechend unempfindlich in der Handhabbarkeit. Ihr Anwendungsbereich ist im wesentlichen auf Blutuntersuchungen grober Genauigkeit eingeschränkt.

Ueblicherweise kommen aber Durchflusszellen zum Einsatz, die in erster Linie zur Durchführung optischer Messverfahren ausgebildet sind. Eine derartige Durchflusszelle ist in der US-A-4,243,883 beschrieben. Diese weist ein Gehäuse mit Deckel und innerhalb des Gehäuses angeordnet eine Lichtquelle und einen gegenüberliegenden Detektor auf. Das Gehäuse ist mit Aussparungen versehen, zur Aufnahme eines beschichteten Durchflussröhrchens. Im Messbereich zwischen Lichtquelle und Detektor ist der Querschnitt des Röhrchens verengt und quadratisch ausgebildet und mit einander gegenüberliegenden Fenstern in der Beschichtung ausgestattet. Diese Durchflusszelle wird in erster Linie zur Blutüberwachung von Patienten während Operationen eingesetzt, das Durchflussröhrchen muss daher einen grösseren Querschnitt aufweisen. Durch die integrierte Anordnung von Lichtquelle und Detektor innerhalb des Gehäuses ist dieses relativ gross bemessen und weist daher auch eine relativ gute Handhabbarkeit auf. Die Einsatzmöglichketen dieser Durchflusszelle sind im wesentlichen auf den angeführten Bereich eingeschränkt.

Weitere etwas kleinere Durchflusszellen sind aus der US-A-3,728,032 und der EP-A-0,158,948 bekannt. Die in der US-PS beschriebene zweiteilige Durchflusszelle weist einen ellipsoidisch ausgebildeten Durchflussbereich auf, mit in Längsrichtung der Zelle einander gegenüberliegenden Ein- und Austrittsöffnungen. Im durchmessergrössten Bereich der Messkammer sind zwei einander gegenüberliegende Messfenster angeordnet. Die beiden spiegelbildlich ausgebildeten Hälften der Durchflusszelle werden mittels Schrauben verbunden. Die in der EP-PS beschriebene Durchflusszelle weist im Messbereich konvexe Vertiefungen auf, welche so in zwei gegeneinander längsverschiebbaren Hälften angeordnet sind, dass sich ein geschlängelter Durchflussbereich ergibt. Im eigentlichen Messbereich ist diese Durchflusszelle mit zwei einander gegenüberliegenden Messfenstern ausgestattet, welche allerdings nicht planparallel sondern sphärisch konvex aufgebildet sind. Dadurch wirken diese wir Linsen, was einen nicht vernachlässigbaren Einfluss auf die Messung haben kann.

In vielen chromatographischen Anwendungen sind die Durchflusszellen noch weiter verkleinert, man spricht in diesem Fall von Mikrodurchflusszellen. Als Durchfluss- und Messkammer dient dabei in aller Regel eine in einem Gehäuse angeordnete Kapillare, vorzugsweise aus Glas oder Quarzglas, wie beispielsweise in "Analytical Chemistry", Vol. 56, No. 4, April 1984, Seiten 619A - 629A beschrieben, welche in den Strahlengang eines Spektrometers montiert wird. Aufgrund der sehr geringen Abmessungen der Kapillaren bestehen dabei jedoch Schwierigkeiten mit deren reproduzierbarer Plazierung. Dadurch können sich ausserdem auch ungenaue Spaltverhältnisse zwischen der Kapillare und dem Detektor des Spektrometers ergeben. Beides führt zu erhöhtem Rauschen und zu Drifterscheinungen bei den Messungen.

Für die vorstehend erwähnten SFC-Anwendungen wird eine hochdrucktaugliche Kapillarzelle benötigt. Um so ungünstiger ist es, wenn die Kapillare innerhalb ihrer Halterung bei ihrer Plazierung bzw. bei der Verbindung zu Anschlusskapillaren verspannt wird.

Es besteht deshalb die Aufgabe, eine Mikrodurchflusszelle der eingangs erwähnten Art zu schaffen, bei welcher die Fixierung der Kapillare innerhalb ihrer Halterung vereinfacht und derart gestaltet ist, dass eine schnelle, reproduzierbare Verbindung zwischen Halterung und Kapillare ermöglicht wird, ohne dass es zu Verspannungen, sei es bei der Montage, sei es durch geänderte Spannungsverhältnisse im Betrieb oder durch Wärmebewegungen, kommt. Insbesondere soll die Mikrodurchflusszelle hochdrucktauglich sein.

Die Lösung dieser Aufgabe besteht in einer Halterung der Kapillare in der Mikrodurchflusszelle gemäss Kennzeichen des Patentanspruches 1. Besonders vorteilhafte Aufbildungsformen der erfindungsgemässen Mikrodurchflusszelle sind Gegenstand der abhängigen Ansprüche.

Nachstehend ist die Erfindung mit ihren ihr als wesentlich zugehörenden Einzelheiten anhand der Zeichnung in einem Ausführungsbeispiel noch näher beschrieben.

Es zeigt in zum Teil schematisierter Darstellung:

Fig. 1 einen Längsschnitt durch die erfindungsgemässe Mikrodurchflusszelle in einseitig explodierter Darstellung, wobei die Schnittebene genau entlang der Berührflächen der beiden die Halterung bildenden Hälften oder Halbschalen verläuft,

Fig. 1a eine Ausschnittsvergrösserung (Ia) aus der Fig. 1,

Fig. 2 eine Hälfte oder Halbschale in teilgeschnittener Darstellung und eine Stirnansicht der zweiten Hälfte der erfindungsgemässen Halterung,

Fig. 3 eine Stirnansicht der montierten Mikrodurchflusszelle und

Fig. 4 eine Seitenansicht einer zusammengefügten Mikrodurchflusszellen-Halterung ohne Verbinder und Klemmringe.

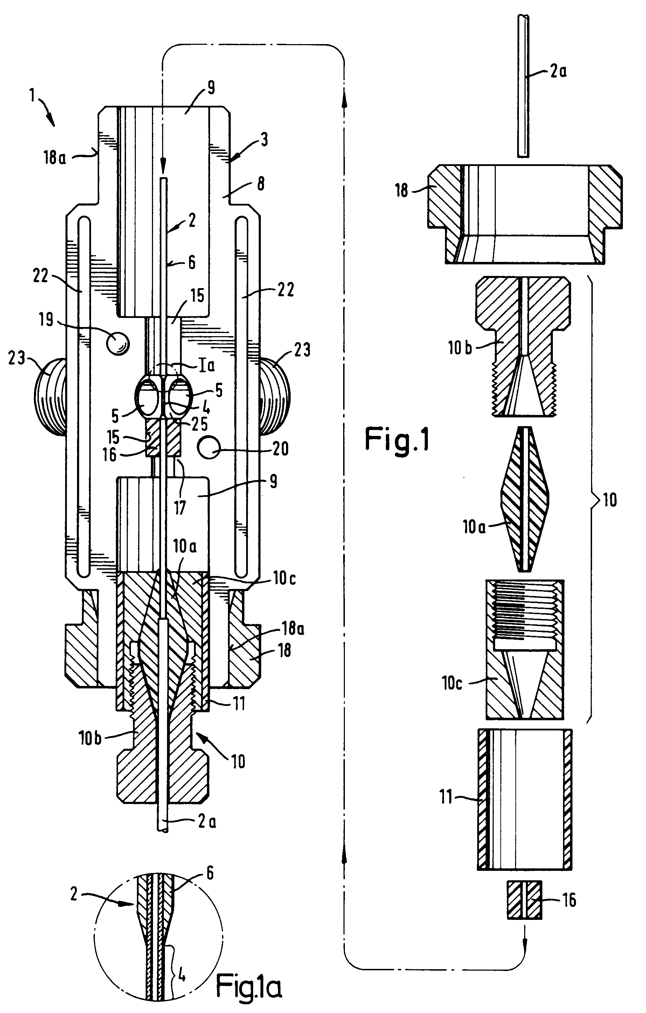

Die in Fig. 1 dargestellte Mikrodurchflusszelle dient für chromatographische oder spektrometrische Messungen und ist im ganzen mit 1 bezeichnet. Sie umfasst eine von dem zu untersuchenden Medium durchflossene Kapillare 2, vorzugsweise aus Glas oder Quarz und eine im ganzen mit 3 bezeichnete Halterung für diese Kapillare 2. An der Kapillare 2 - falls diese mit einer Beschichtung oder einem Ueberzug versehen ist - und an der Halterung 3 sind lichtdurchlässige Bereiche 4 bzw. Kanäle 5 für das Messlicht vorgesehen, wobei sich bei der Ausführungsform nach den Figuren 1 bis 4 jeweils zwei Kanäle 5 gegenüberliegen. Unter Messlicht wird im folgenden ultraviolettes, sichtbares und infrarotes Licht verstanden.

Wenn die Kapillare 2 beschichtet ist, sind die lichtdurchlässigen Bereiche 4 an der Kapillare 2 dadurch gebildet, dass im Messbereich die an der Kapillare 2 z.B. zu deren Stabilisierung vorgesehene Beschichtung 6 entfernt oder weggelassen ist, wie beispielsweise in der eingangs zitierten Druckschrift "Analytical Chemistry" beschrieben.

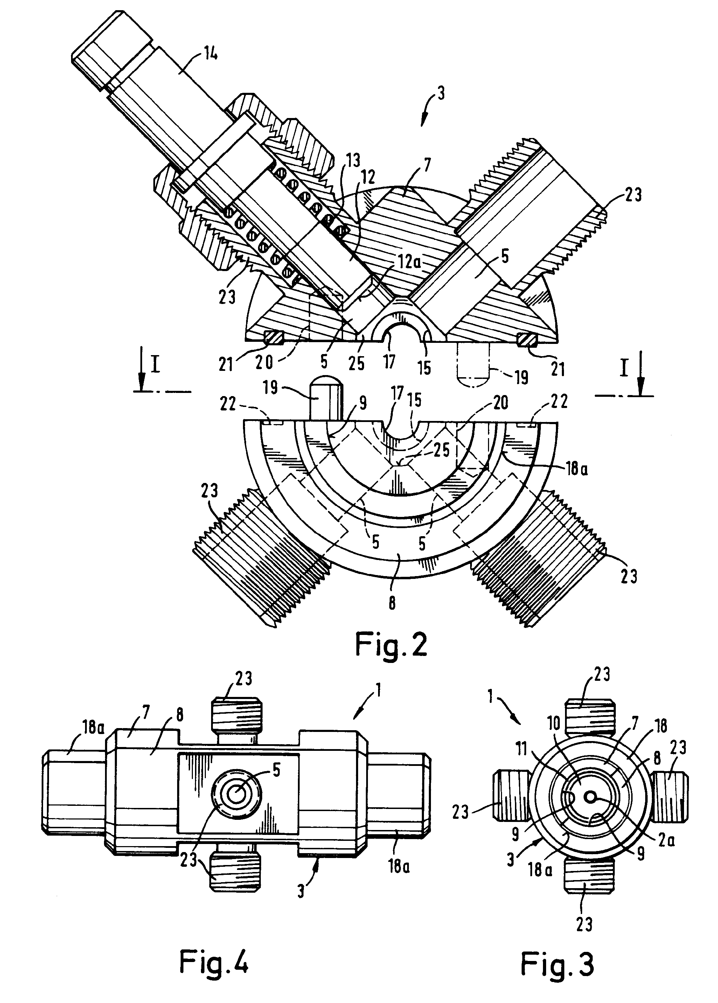

Aus Fig. 2 ist ersichtlich, dass die Halterung 3 zwei im wesentlichen gleiche Halbschalen 7 und 8 umfasst, welche planparallele Berührflächen aufweisen.

Die in Fig. 1 dargestellte Halbschale 8 und ihr Gegenstück die Halbschale 7 weisen jede an ihren beiden Stirnseiten sich in die Halbschalen 7 und 8 fortsetzende, stirnseitig offene Ausnehmungen 9 auf. Diese sind zur Aufnahme von Verbindern 10 für die Kapillare 2 ausgebildet. Jeder Verbinder 10 umfasst einen mit einer zentrischen Bohrung versehenen Klemmeinsatz oder ein elastisches Ringteil 10a, welches in eine entsprechend ausgebildete Bohrung eines mit einem Innengewinde versehenen Zylinderteils 10c einsetzbar ist. Diese beiden Verbinderteile (elastisches Ringteil 10a und Zylinderteil 10c) sind auf die Kapillare 2 aufschiebbar. Durch axiales Einschrauben eines mit einem Aussengewinde versehenen und eine zentrische Bohrung aufweisenden Schraubteiles 10b in das Zylinderteil 10c wird das elastische Ringteil 10a axial und damit auch radial verformt und so die Kapillare eingespannt.

Es genügt, die beidseitig mit den Verbindern 10 versehene Kapillare 2 in eine Halbschale 8 einzulegen und dann von der anderen Seite her die zweite Halbschale 7 anzufügen und zu schliessen, um die Mikrodurchflusszelle 1 fertigzustellen, wobei die Kapillare 2 spannungsfrei in der Halterung 3 fixiert ist. An den Verbindern 10 können dabei in üblicher Weise Anschlusskapillaren 2a angeschlossen sein oder werden, falls nicht eine durchgehende Kapillare 2 Verwendung findet.

Durch geeignete Ausbildung der Bohrung der elastischen Ringteile 10a können damit auch grössere Durchmesserunterschiede zwischen der in der Halterung 3 eingespannten Zellkapillare 2 und den Anschlusskapillaren 2a ausgeglichen werden.

Eine wichtige und vorteilhafte, auch Toleranzen bei der Herstellung und Montage sowie z.B. durch Druck und Wärme erzeugte Spannungsbewegungen zulassende Ausgestaltung der Mikrodurchflusszelle 1 sieht gemäss Fig. 1 vor, dass die in die Ausnehmungen 9 der Halterung 3 passgenau einsetzbaren Verbinder 10 an ihrer Aussenseite eine elastische Beschichtung, im Ausführungsbeispiel einen Schrumpfschlauch 11 aufweisen, welcher beim Einsetzen der Verbinder 10 in die Ausnehmungen 9 oder umgekehrt, beim Ansetzen der Ausnehmungen 9 an diese Verbinder 10 und beim Schliessen der Halterung 3 einklemmbar ist, so dass die Verbinder 10 einerseits radial, andererseits aber auch axial elastisch geringfügig auslenkbar sind. Dabei genügt schon eine ganz geringe Auslenkbarkeit, da die Kapillare 2 selbst nur sehr kleine Abmessungen hat. Auf diese Weise können eventuelle Spannungsbewegungen oder Toleranzen so ausgeglichen werden, dass die Kapillare 2 weitgehend frei von Spannungen gehalten wird. Gleichzeitig lässt sich über eine solche elastische Beschichtung oder einen Schrumpfschlauch 11 auch eine ausreichend grosse Klemmkraft übertragen, so dass die Kapillare 2 sogar bei hohem Innendruck bis 500 bar und mehr fixiert und eingeklemmt bleibt. Ausserdem stellen die Schrumpfschläuche 11 Dichtungen gegenüber den stirnseitigen Ausnehmungen 9 der Halterung 3 dar und verhindern unerwünschten Fehllichteinfall.

Gemäss Fig. 2 und 3 sind im dargestellten Ausführungsbeispiel der Halterung 3 vier radiale, bis zu der im Inneren befindlichen Kapillare 2 reichende, durchgehende Kanäle 5 in einer Querschnittsebene angeordnet. Wenigstens zwei einander gegenüberliegende Kanäle 5 dienen als Messöffnungen für das Messlicht, während die anderen Kanäle für zusätzliche Messungen und/oder zur Beobachtung vorgesehen sind. So kann beispielsweise durch Ansetzen eines Mikroskops an einen dieser zusätzlichen Kanäle das Anbringen und Vorschieben von Lichtleitern 12 bis unmittelbar vor die Kapillare 2 beobachtet werden. Gegebenenfalls genügen aber auch schon drei derartige Kanäle 5 oder auch nur zwei solche Kanäle 5, die im Winkel zueinander stehen können, wie beispielsweise im Falle von Fluoreszenz-Messungen, wobei das Messlicht axial in die Kapillare 2 eingestrahlt wird und die Fluoreszenzstrahlung an einer oder den beiden Messöffnungen detektiert wird. In einer besonderen Ausbildungsform der Halterung 3 weist nur eine Halbschale 7 oder 8 einen radialen Kanal 5 auf. In diesem Fall ist die zweite Halbschale 8 oder 7 an ihrer Innenwandung mit einer reflektierenden Fläche ausgestattet, welcher der Mündungsöffnung des Kanals 5 genau gegenüberliegend angeordnet ist. Das Messlicht wird durch den einzigen Kanal 5 eingestrahlt, an der reflektierenden Fläche reflektiert und durch den Kanal 5 wieder abgeführt und zum Detektor geleitet.

In Fig. 2 sind ein Lichtleiter 12 und sein gegen die Kraft einer Feder 13 ansteckbarer Lichtleiterstecker 14 in eine der Messöffnungen 5 eingeführt dargestellt. Der unmittelbar benachbarte, rechtwinklig dazu angeordnete Kanal erlaubt eine Beobachtung des Anbringvorganges, so dass sichergestellt ist, dass der Lichtleiter 12 und vor allem seine Stirnseite 12a in der richtigen Position relativ zu der Kapillare 2 und deren lichtdurchlässigen Bereich 4 angeordnet wird, ohne die Kapillare 2 selbst zu gefährden.

Gemäss Fig. 1 sind die stirnseitigen Ausnehmungen 9 dar Halbschale 8 (und analog die der Halbschale 7) durch eine zentrale Ausnehmung 15 verbunden, welche gegenüber den stirnseitigen Ausnehmungen 9 einen kleineren Querschnitt aufweist und sich etwa über das mittlere Drittel der Länge der Halbschalen (7,8) erstreckt. Wie aus Fig. 2 ersichtlich sind die Querschnittsformen der zentralen Ausnehmung 15, wie auch der stirnseitigen Ausnehmungen 9 der im wesentlichen halbkreisförmig ausgebildeten Querschnittform der Halbschalen 7 und 8 angeglichen, so dass sich nach Zusammenfügen der Halbschalen 7 und 8 eine im wesentlichen zylindrische Form der Halterung 3 mit den zylindrischen stirnseitigen 9 und zentralen Ausnehmungen 15 unterschiedlicher Durchmesser ergibt. Etwa mittig angeordnet weist die zentrale Ausnehmung 15 einen im wesentlichen halbkugelförmig erweiterten Bereich 25 auf. In diesem Bereich münden die als Mess- oder Beobachtungsöffnung dienenden Kanäle 5.

Zum Zentrieren der Kapillare 2 gegenüber dem halbkugelförmigen Bereich 25 dienen Abstandshalter 16, welche mit einer zentralen Bohrung für die Kapillare versehen sind. Nach Aufschieben dieser Abstandshalter 16 auf die Kapillare 2 auf beiden Seiten der lichtdurchlässigen Bereiche 4 werden die Abstandshalter 16 mit der Kapillare 2 in die zentrale Ausnehmung 15 eingesetzt. Die Kapillare 2 ist also nicht nur durch die Verbinder 10, sondern auch durch die Abstandshalter 16 in der Halterung 3 fixiert. Insbesondere unterstützen die Abstandshalter 16 die Kapillare 2 im Bereich der Messöffnungen und verbindern Verspannungen.

Um auch die Abstandhalter 16 schnell, genau und gleichmässig positionieren zu können, weist die zentrale Ausnehmung 15 in der Halterung 3 gegenüber der Ausnehmung 9 für die Verbinder 10 eine weitere Verengung auf, mit einer Schulter als stirnseitigem Anschlag 17 für die Abstandhalter 16. Im Ausführungsbeispiel ist jede Halbschale 7 und 8 jeweils nur mit einer derartigen Verengung mit Anschlag 17 ausgestattet, so dass sich der Anschlag 17 für den einen Abstandhalter in der Halbschale 7 befindet und der für den zweiten Abstandhalter 16 in der Halbschale 8, wie in Fig. 1 dargestellt. Diese Anordnung von zwei, jeweils nur halbseitig ausgebildeten Anschlägen 17 genügt, die ringförmigen Abstandhalter 16 axial zu fixieren. Die Halbschalen sind entsprechend einfacher aufgebaut, und die Gefahr möglicher Verspannungen der Kapillare 2 durch Einklemmen der Abstandshalter 16 zwischen den Anschlägen 17 bei doppelseitiger Ausbildung wird vermieden.

Zwei über ihre Aussenkontur passende Klemmringe 18 dienen zur Befestigung der beiden Halbschalen 7 und 8 aneinander. Diese sind im Bereich der Verbinder 10 aussenseitig aufsteckbar, wie es in Fig. 1 dargestellt ist. Dabei sitzen diese Klemmringe 18 in Montagestellung fest auf entsprechend ausgebildeten zylindrischen Absätzen 18a der Halterung 3.

Die beiden Halbschalen 7 und 8 sind mit Mitteln zu ihrer gegenseitigen passgenauen Verbindung ausgestattet. In Fig. 2 erkennt man dabei, dass die Mittel für die passgenaue Verbindung der beiden Halbschalen 7 und 8 der Halterung 3 als an der Berührfläche der einen Halbschale vorstehender Passstift 19 und an der entsprechenden Stelle der Berührfläche der anderen Halbschale ausgesparte Passöffnung 20 ausgebildet sind. Im dargestellten Ausführungsbeispiel weist jede Halbschale 7 und 8 einen Passstift 19 und eine Passöffnung 20 auf. Genau so wäre es aber auch möglich, dass die eine Halbschale zwei Passstifte 19 und die andere Halbschale zwei Passöffnungen 20 aufweist.

In den Figuren 1 und 2 erkennt man ferner, dass entlang den Längsrändern der Halbschale 8 beidseits des halbkugelförmigen Bereiches 25 Dichtleisten 21 als Fehllichtabschirmungen und Lichtabdichtungen angeordnet sind, welche teilweise in Nuten 22 in der Berührfläche der anderen Halbschale 7 versenkbar sind. Neben der Abschirmung von Fehllicht erhöhen diese vorzugsweise elastisch ausgebildeten Dichtleisten 21 beim Zusammenfügen der beiden Halbschalen 7 und 8 auch noch die Gesamtelastizität der Halterung 3, was gleichfalls zur Vermeidung oder dem Ausgleichen von Spannungen dient.

Wie in Fig. 3 und 4 angeordnet, sind die Kanäle 5 vorzugsweise symmetrisch, insbesondere im rechten Winkel zueinander stehend in jeder Halbschale 7 oder 8 angeordnet. Prinzipiell sind jedoch auch beliebige andere Anordnungen der Kanäle 5 möglich, insbesondere dann, wenn mehr oder weniger als vier derartige Kanäle 5 vorgesehen sind.

Schliesslich sei noch erwähnt, dass die Kanäle 5 sich in radial nach aussen vorstehende Buchsen 23 fortsetzen, die vorzugsweise mit Gewinden, insbesondere Aussengewinden zum Befestigen der Lichtleiterstecker oder Lichtwellenleiter 14 ausgestattet sind. Dadurch wird deren Montage und somit die Handhabung der gesamten Mikrodurchflusszelle 1 noch weiter vereinfacht.

Die erfindungsgemässe Ausbildung der Mikrodurchflusszelle erlaubt eine spannungsfreie Montage der Messkapillare ohne störende äussere Haltekräfte. Die Kapillare ist in der Halterung fixiert, Zu- und Abflussöffnungen sind nicht gegeneinander versetzt. Die lichtdurchlässigen Bereiche der Kapillare sind einfach gegenüber von Lichtquellen und Detektoren justierbar. Mess- und Anschlusskapillaren unterschiedlicher Querschnitte lassen sich leicht miteinander kombinieren. Ausserdem ist die erfindungsgemässe Mikrodurchflusszelle für den Einsatz faseroptischer Uebertragungsmittel für das Messlicht und den Detektor ausgebildet.

Die Verwendung von faseroptischen Uebertragungsmitteln zur Zu- und Abfuhr des Messlichtes erlaubt eine Ausgestaltung von eigener schutzwürdiger Bedeutung dahingehend, dass die Querschnitte der Lichtleiter oder Lichtwellenleiter verschieden gross sein können. Dadurch kann auf Aenderungen des Brechungsindexes des in der Kapillare befindlichen Mediums in einfacher Weise Einfluss genommen werden. So können z.B. Brechungsindexänderungen der mobilen Phasen in der Kapillare, die während der in der Chromatographie üblicherweise verwendeten Gradientenprogramme auftreten und die bei der UV-Detektion störend sind, dadurch minimiert werden, dass der Eintritts-Querschnitt des Abfuhr-Lichtleiters oder -Lichtwellenleiters grösser als der des Zuleitungs-Lichtleiters oder -Lichtwellenleiters gewählt wird. Dies ist insbesondere für die eingangs erwähnten LC- und vor allem die SFC-Verfahren von grossem Vorteil.

Andererseits könnten auch umgekehrte Querschnittsverhältnisse der optischen Fasern oder Leiter gewählt werden, so dass die Mikrodurchflusszelle auf Brechungsindexänderungen des Mediums sensitiv wird. Die Zelle kann dann als Brechungsindexdetektor benutzt werden.

Ein völlig neuartiges Anwendungsgebiet für die erfindungsgemässe Mikrodurchflusszelle ist die Szintillationsmessung mit Szintillatoren. Dazu können Glasszintillatoren oder Szintillationsfasern eingesetzt werden. Dabei werden eine oder mehrere Szintillationsfasern auf die vorhin anhand des Ausführungsbeispiels beschriebene Art innerhalb der Halterung 3 fixiert. Als Szintillationsfaser werden beispielsweise Kunststoffasern (Typ NE 102A) oder Glasfasern (Typ NE 901) der Firma Nuclear Enterprises Ltd., UK eingesetzt. Derartige Mikrodurchflusszellen werden zur Detektion von Spuren radioaktiver Elemente eingesetzt. Die Flüssigkeitsprobe durchströmt die Mikrodurchflusszelle, wobei die Radionuklide in der Flüssigkeit die Szintillationsfasern zur Emission von Licht anregen, welches durch einen oder mehrere Kanäle 5 abgeführt und vorzugsweise einem Photo-Multiplier zugeführt wird.

Durch die Verwendung von faseroptischen Uebertragungsmitteln, Lichtleitern oder Lichtwellenleitern ist in vorteilhafter Weise eine räumliche Trennung der Lichtquelle von der Mikrodurchflusszelle und dadurch ein Temperieren der Zelle möglich, was z.B. die Detektion im überkritischen Medium ermöglicht. Ebenso kann die Durchflusszelle dadurch in exgeschützten Räumen verwendet werden.

Die erfindungsgemässe Mikrodurchflusszelle ist für den direkten Einbau in kommerziell erhältliche Geräte ausgebildet. Aus den vorstehend erwähnten Gründen ist es auch in einem solchen Falle von Vorteil, wenn für die Zu- und Abfuhr des Messlichtes Lichtleiter oder Lichtwellenleiter oder optische Fasern verwendet werden können.

## Patentansprüche

1. Mikrodurchflusszelle (1) für chromatrographische oder spektrometrische Messugen mit einer von dem zu untersuchenden Medium durchflossenen Kapillare (2) aus Glas oder Quarzglas, und mit einer Halterung (3) für diese Kapillare (2), wobei an der Halterung (3) und der Kapillare (2) licht-, UV-licht und/oder Infrarotlichtdurchlässige Bereiche (4) als Fenster für das zugeführte und das abgeführte Messlicht vorgesehen sind,

EP 0 326 511 B1

dadurch gekennzeichnet, dass die Halterung (3) aus mindestens zwei in ihrer Längserstreckung trennbaren Teilen lösbar zusammengesetzt ist, die offene Ausuehmungen (9) zur Aufnahme von Verbindern (10) aufweisen, die zur Fixierung der Kapillare innerhalbder Halterung dienen.

2. Mikrodurchflusszelle nach Anspruch 1, dadurch gekennzeichnet, dass die Teile als zwei im wesentlichen gleiche Halbschalen (7,8) von im wesentlichen halbkreisförmigem Querschnitt ausgebildet sind, deren Berührebenen planparallel zueinander verlaufen.

3. Mikrodurchflusszelle nach Anspruch 2, dadurch gekennzeichnet, dass die Ausnehmungen (9) an den beiden offenen Stirnenden der Halbschalen (7,8) vorgeshen sind und schalen (7,8) fortsetzen.

4. Mikrodurchflusszelle nach Anspruch 3, dadurch gekennzeichnet, dass die Verbinder (10) an ihrer Aussenseite eine elastische Beschichtung aufweisen, welche nach dem Einsetzen der Verbinder (10) in die stirnseitigen Ausnehmungen (9) der Halbschalen (7,8), beim Zusammenfügen derselben einklemmbar ist, so dass die Verbinder (10) axial fixiert und radial und/oder axial elastisch geringfügig auslenkbar sind.

5. Mikrodurchflusszelle nach einem der Ansprüche 2 bis 4, dadurch gekennzeichnet, dass die Halterung (3) zwei im Winkel zueinander angeordnete, etwa radiale Kanäle (5) aufweist, welche beide an derselben Halbschale (7 od. 8) angebracht sind.

6. Mikrodurchflusszelle nach einem der Ansprüche 1 bis 5, dadurch gekennzeichnet, dass die Halterung (3) mindestens drei radiale, bis zu der in ihrem Inneren befindlichen Kapillare (2) reichende Kanäle (5) aufweist, welche in einer Querschnittsebene der Halterung angeordnet sind, und von denen wenigstens zwei einander gegenüberliegende Kanäle (5) als Messöffnungen vorgesehen sind, während der verbleibende freie Kanal für zusätzliche Messungen und/oder zur Beobachtung der Kapillare ausgebildet ist.

7. Mikrodurchflusszelle nach einem der Ansprüche 3 bis 6, dadurch gekennzeichnet, dass die stirnseitigen Ausnehmungen (9) der Halbschalen (7,8) durch eine zentrale Ausnehmung (15) verbunden sind, welche gegenüber den stirnseitigen Ausnehmungen (9) einen kleineren Querschnitt aufweist und sich etwa über das mittlere Drittel der Länge der Halbschalen (7,8) erstreckt.

8. Mikrodurchflusszelle nach Anspruch 7, dadurch gekennzeichnet, dass die zentrale Ausnehmung (15) etwa mittig angeordnet einen im wesentlichen halbkugelförmig erweiterten Bereich (25) aufweist.

9. Mikrodurchflusszelle nach Anspruch 8, dadurch gekennzeichnet, dass die Kanäle (5) in den halbkugelförmigen Bereich (25) jeder Halbschale (7,8) münden.

10. Mikrodurchflusszelle nach Anspruch 8 oder 9, dadurch gekennzeichnet, dass der Querschnitt der zentralen Ausnehmung (15) jeder Halbschale (7,8) der Querschnittsform der stirnseitigen Ausnehmungen (9) angeglichen ist und zur Aufnahme von mindestens einem mit einer zentralen Bohrung versehenen Abstandhalter (16) zum Zentrieren der Kapillare (2) gegenüber dem halbkugelförmigen Bereich (25) ausgebildet ist.

11. Mikrodurchflusszelle nach Anspruch 10, dadurch gekennzeichnet, dass je ein Abstandhalter (16) beidseits des halbkugelförmigen Bereiches (25) einsetzbar ist.

12. Mikrodurchflusszelle nach Anspruch 10 oder 11, dadurch gekennzeichnet, dass die zentrale Ausnehmung (15) zwischen dem halbkugelförmigen Bereich (25) und mindestens einer der stirnseitigen Ausnehmungen eine Verengung mit einer Schulter als stirnseitigem Anschlag (17) für die Abstandhalter (16) aufweist, wobei jede Halbschale (7,8) jeweils nur eine derartige Verengung mit Anschlag (17) aufweist, so dass die Anschläge (17) in axialer Richtung der Halbschalen (7,8) gesehen, auf gegenüberliegenden Seiten des halbkugelförmigen Bereiches (25) angeordnet sind.

13. Mikrodutchflusszelle nach einem der Ansprüche 2 bis 12, dadurch gekennzeichnet, dass zum Befestigen der beiden Halbschalen (7,8) aneinander mindestens ein über ihre Aussenkontur passender, aussenseitig aufsteckbarer Klemmring (18) vorgesehen ist.

14. Mikrodurchflusszelle nach einem der Ansprüche 2 bis 11, dadurch gekennzeichnet, dass die beiden Halbschalen (7,8) Mittel zu ihrer gegenseitigen passgenauen Verbindung aufweisen, welche mindestens einen an der Berührfläche der einen Halbschale (7 oder 8) vorstehenden Passstift (19) und an entsprechender Stelle der Berührfläche der anderen Halbschale (8 oder 7) eine Passöffnung (20) umfassen.

15. Mikrodurchflusszelle nach einem der Ansprüche 2 bis 14, dadurch gekennzeichnet, dass eine der beiden Halbschalen (7 oder 8) entlang ihrer Längsränder beidseits des halbkugelförmigen Bereiches (25) Dichtleisten (21) zur Abschirmung von Fehllicht aufweist, welche teilweise in Nuten (22) versenkbar sind, die an äquivalenter Stelle in der Berührfläche der anderen Halbschale (8 oder 7) ausgespart sind.

16. Mikrodurchflusszelle nach einem der Ansprüche 5 bis 15, dadurch gekennzeichnet, dass die Kanäle (5) sich in etwa radial nach aussen vorstehende Buchsen (23) fortsetzen, welche Gewinde zum Befestigen von Lichtleitersteckern (14) aufweisen.

17. Mikrodurchflusszelle nach einem der vorangehenden Ansprüche, dadurch gekennzeichnet, dass die Querschnitte der Lichtleiter oder Lichtwellenleiter (12) am Lichteintritt und Lichaustritt verschieden gross sind.

18. Mikrodurchflusszelle nach einem der vorangehenden Ansprüche, dadurch gekennzeichnet, dass der Eintrittsquerschnitt des Abfuhr-Lichtleiters oder -Lichtwellenleiters grösser als der des Zuleitungs-Lichtleiters

**6**

oder -Lichtwellenleiters ist.

19. Mikrodurchflusszelle nach einem der vorangehenden Ansprüche, dadurch gekennzeichnet, dass für eine Verwendung der Durchflusszelle (1) als Brechungsindexdetektor der Eintrittsquerschnitt des Zuleitungs-Lichtleiters oder -Lichtwellenleiters grösser als der des Abfuhr-Lichtleiters oder -Lichtwellenleiters ist.

## Claims

1. A micro-flow cell (1) for chromatographic or spectrometric measurements, comprising a capillary tube (2), made of glass or silica glass, through which the medium to be examined flows, and comprising a holding device (3) for said capillary tube (2), regions (4) that are permeable to light, UV light and/or infrared light being provided on the holding device (3) and the capillary tube (2) in the form of windows for the incoming and outgoing measuring light, wherein the holding device (3) is separably assembled from at least two parts that are separable along their length and have open recesses (9) for receiving connectors (10) serving to secure the capillary tube inside the holding device.

2. A micro-flow cell according to claim 1, wherein the parts are constructed as two substantially identical half-shells (7, 8) that are of substantially semi-circular cross-section and the contact planes of which extend plane-parallel to each other.

3. A micro-flow cell according to claim 2, wherein the recesses (9) are provided at the two open ends of the half-shells (7, 8) and continue into the half-shells (7, 8).

4. A micro-flow cell according to claim 3, wherein the connectors (10) have on their outside a resilient coating which, after insertion of the connectors (10) into the end-face recesses (9) in the half-shells (7, 8), can be gripped therein upon joining the half-shells together, so that the connectors (10) are fixed axially and are slightly resiliently displaceable radially and/or axially.

5. A micro-flow cell according to any one of claims 2 to 4, wherein the holding device (3) has two approximately radial passages (5) arranged at an angle to each other and both of which are provided in the same half-shell (7 or 8).

6. A micro-flow cell according to any one of claims 1 to 5, wherein the holding device (3) has at least three radial passages (5) arranged in a cross-sectional plane of the holding device and extending as far as the capillary tube (2) situated in the interior of the holding device, of which passages at least two passages (5) lying opposite each other are provided as measuring orifices, while the remaining, free passage is designed for additional measurements and/or for observing the capillary tube.

7. A micro-flow cell according to any one of claims 3 to 6, wherein the end-face recesses (9) in the half-shells (7, 8) are connected by a central recess (15) which has a smaller cross-section in comparison with the end-face recesses (9) and extends approximately over the central third of the length of the half-shells (7, 8).

8. A micro-flow cell according to claim 7, wherein the central recess (15) has a substantially hemispherically widened region (25) arranged approximately in the middle thereof.

9. A micro-flow cell according to claim 8, wherein the passages (5) open into the hemispherical region (25) of each half-shell (7, 8).

10. A micro-flow cell according to either claim 8 or claim 9, wherein the cross-section of the central recess (15) of each half-shell (7, 8) is matched to the cross-sectional shape of the end-face-recesses (9) and is constructed to receive at least one spacer (16) provided with a central bore, in order to centre the capillary tube (2) with respect to the hemispherical region (25).

11. A micro-flow cell according to claim 10, wherein a spacer (16) can be inserted on both sides of the hemispherical region (25).

12. A micro-flow cell according to either claim 10 or claim 11, wherein the central recess (15) has, between the hemispherical region (25) and at least one of the end-face recesses, a narrowed portion with a shoulder serving as an end-face stop (17) for the spacers (16), each half-shell (7, 8) having only one such narrowed portion with a stop (17), so that, viewed in the axial direction of the half-shells (7, 8), the stops (17) are arranged on opposite sides of the hemispherical region (25).

13. A micro-flow cell according to any one of claims 2 to 12, wherein for fastening the two half-shells (7, 8) to each other at least one clamping ring (18) which can be placed on over the outside thereof and fits over the outer contour thereof is provided.

14. A micro-flow cell according to any one of claims 2 to 11, wherein the two half-shells (7, 8) have means for connecting them to each other with an accurate fit, which means comprise at least one locating pin (19) projecting from the contact surface of the one half-shell (7 or 8) and a locating opening (20) arranged at the corresponding position in the contact surface of the other half-shell (8 or 7).

15. A micro-flow cell according to any one of claims 2 to 14, wherein one of the two half-shells (7 or 8) has sealing strips (21) arranged along its longitudinal edges on both sides of the hemispherical region (25) as a protection against unwanted light, which sealing strips (21) can be partly sunk into grooves (22) arranged at the equivalent position in the contact surface of the other half-shell (8 or 7).

16. A micro-flow cell according to any one of claims 5 to 15, wherein the passages (5) continue into bushings (23) which project approximately radially outward and which have threads for the attachment of photoconductor connectors (14).

17. A micro-flow cell according to any one of the preceding claims, wherein the cross-sections of the photoconductors or light wave guides (12) at the light inlet and the light outlet are of different sizes.

18. A micro-flow cell according to any one of the preceding claims, wherein the entry cross-section of the outlet photoconductor or light wave guide is greater than that of the inlet photoconductor or light wave guide.

19. A micro-flow cell according to any one of the preceding claims, wherein, in order to use the micro-flow cell (1) as a refractive index detector, the entry cross-section of the inlet photoconductor or light wave guide is greater than that of the outlet photoconductor or light wave guide.

## Revendications

1. Cellule (1) à circulation d'écoulement dans un capillaire (ou "cellule à capillaire") destinée aux mesures chromatographiques ou spectrométriques, cette cellule comportant un capillaire (7) en verre ou en quartz parcouru par le fluide qui doit être examiné et un support (3) pour ces capillaires (2), des zones (4) laissant passer la lumière, la lumière ultraviolette et/ou la lumière infrarouge étant prévues sur le support (3) et sur le capillaire (2), sous forme de fenêtres pour la lumière de mesure, à son arrivée et à sa sortie, cellule caractérisée en ce que le support (3) est composé d'au moins deux pièces détachables susceptibles d'être séparées dans leur sens longitudinal, et en ce que les évidements (9) ouverts servent à recevoir des éléments (10) de liaison qui eux-mêmes servent à fixer le capillaire à l'intérieur du support.

2. Cellule à capillaire selon la revendication 1, caractérisée en ce que les pièces ont la forme de deux demi-coquilles (7, 8) sensiblement identiques, de section transversale sensiblement semi-circulaire et dont les plans de contact s'étendent parallèlement l'un à l'autre.

3. Cellule à capillaire selon la revendication 2, caractérisée en ce que les évidements (9) sont prévus aux deux extrémités frontales ouvertes des demi-coquilles (7, 8) et en ce qu'ils se prolongent dans les demi-coquilles (7, 8).

4. Cellule capillaire selon la revendication 3, caractérisée en ce que les éléments (10) de liaison présentent, sur leur côté extérieur, un revêtement formant une couche élastique, qui peut être bloquée après la mise en place des éléments (10) de liaison dans les évidements (9) ménagés aux extrémités frontales des demi-coquilles (7,8) lors de l'assemblage de celles-ci, si bien que les éléments (10) de liaison sont fixés axialement et radialement et/ou peuvent un peu être élastiquement déplacés axialement.

5. Cellule à capillaire selon une des revendications 2 à 4, caractérisée en ce que le support (3) présente deux canaux (5) approximativement radiaux, formant un angle entre eux, qui sont tous deux ménagés sur la même demi-coquille (7 ou 8).

6. Cellule à capillaire selon une des revendications 1 à 5, caractérisée en ce que le support (3) présente au moins trois canaux (5) qui s'étendent jusqu'au capillaire (2) se trouvant à l'intérieur de ce support, et qui sont disposés dans un plan de section transversale du support, au moins deux de ces canaux (5), situés l'un en face de l'autre, étant prévus en tant qu'orifices de mesure, tandis que le canal qui reste libre est réalisé en vue de mesures supplémentaires et/ou de l'observation du capillaire.

7. Cellule à capillaire selon une des revendications 3 à 6, caractérisée en ce que les évidements (9) frontaux des demi-coquilles (7, 8) sont reliés par un évidement (15) central, qui présente une section transversale plus petite que celle des évidements (9) frontaux et qui s'étend approximativement sur le tiers médian de la longueur des demi-coquilles (7, 8).

8. Cellule à capillaire selon la revendication 7, caractérisée en ce que l'évidement (15) central présente, disposée approximativement au milieu, une zone (25) qui est élargie sensiblement en forme d'hémisphère.

9. Cellule à capillaire selon la revendication 8, caractérisée en ce que les canaux (5) débouchent dans la zone (25) hémisphérique de chaque demi-coquille (7, 8).

10. Cellule à capillaire selon la revendication 8 ou 9, caractérisée en ce que la section transversale de l'évidement (15) central de chaque demi-coquille (7, 8) est accordée à la forme de section transversale des évidements (9) frontaux et est conformée en vue de recevoir au moins une entretoise (16) de maintien d'écart, munie d'un alésage central, et destinée au centrage du capillaire (2) par rapport à la zone hémisphérique (25).

11. Cellule à capillaire selon la revendication 10, caractérisée en ce qu'une entretoise (16) peut être mise en place sur chacun des deux côtés de la zone hémisphérique (25).

12. Cellule à capillaire selon la revendication 10 ou 11, caractérisée en ce que l'évidement central (15) présente, entre la zone hémisphérique (25) et au moins un des évidements frontaux, un rétrécissement comportant un épaulement servant de butée (17) du côté frontal pour les entretoises (16) de maintien d'écart, chaque demi-coquillle (7, 8) ne présentant qu'un seul rétrécissement de ce genre comportant une butée (17), de telle façon que les butées (17), vues dans le sens axial des demi-coquilles (7, 8), sont disposées sur des côtés opposés de la zone hémisphérique (25).

13. Cellule à capillaire selon une des revendications 2 à 12, caractérisée en ce que, pour la fixation des deux demi-coquilles (7, 8) l'une avec l'autre, on prévoit au moins un circlip (18) adapté exactement à leur contour extérieur, et pouvant être emboîté et être mis en place de l'extérieur.

14. Cellule à capillaire selon une des revendications 2 à 11, caractérisée en ce que les deux demi-coquilles (7, 8) présentent des moyens destinés à leur liaison réciproque ajustée avec précision, qui comprennent au moins une tige ou goujon (19) d'assemblage faisant saillie sur la surface de contact d'une des demi-coquilles (7 ou 8) et une ouverture (20) d'assemblage ménagée à l'emplacement correspondant de la surface de contact de l'autre demi-coquille (8 ou 7).

15. Cellule à capillaire selon une des revendications 2 à 14, caractérisée en ce qu'une des deux demi-coquilles (7 ou 8) présente, le long de ses bords longitudinaux, des deux côtés de la zone hémisphérique (25), des barrettes (21) d'étanchéité qui sont destinées à faire écran contre la lumière parasite, et qui peuvent être partiellement encastrées dans des gorges (22) ménagées à un emplacement équivalent de la surface de contact de l'autre demi-coquille (8 ou 7).

16. Cellule à capillaire selon une des revendications 5 à 15, caractérisée en ce que les canaux (5) se prolongent par des manchons (23), qui font saillie approximativement radialement vers l'extérieur et qui présentent des filets destinés à la fixation de fiches (14) de conducteurs optiques.

17. Cellule à capillaire selon une des revendications précédentes, caractérisé en ce que les sections transversales des conducteurs optiques (12) ou guides (12) d'ondes lumineuses ont une grosseur différente à l'arrivée de la lumière et à la sortie de la lumière.

18. Cellule à capillaire selon une des revendications précédentes, caractérisée en ce que la section d'entrée du conducteur optique de sortie, ou du guide d'ondes lumineuses de sortie, est plus grande que celle du conducteur optique d'entrée, ou du guide d'ondes lumineuses d'entrée.

19. Cellule à capillaire selon une des revendications précédentes, caractérisée en ce qu'en vue d'une utilisation de la cellule (1) en tant que détecteur d'indice de réfraction, la section transversale d'entrée du conducteur optique d'entrée, ou du guide d'ondes lumineuses d'entrée, est plus grande que celle du conducteur optique de sortie, ou du guide d'ondes lumineuses de sortie.

Fig.1

Fig.1a

Fig. 2

Fig. 4

Fig. 3